Europäisches Patentamt

(19)  European Patent Office

Office européen des brevets

(11)  **EP 0 664 182 B1**

(12)  **FASCICULE DE BREVET EUROPEEN**

(45) Date de publication et mention
de la délivrance du brevet:
**18.06.1997  Bulletin 1997/25**

(51) Int. Cl.⁶: **B23K 11/25**

(21) Numéro de dépôt: **95400076.6**

(22) Date de dépôt: **16.01.1995**

(54) **Dispositif de commande de soudage auto-adaptative pour pinces à souder par résistance**

In einem Widerstandschweissverfahren, Einrichtung zum selbsteinstellenden Steuern von Widerstandschweisszangen

Self-adaptative resistance welding gun control device

(84) Etats contractants désignés:
**DE GB IT**

(30) Priorité: **19.01.1994 FR 9400555**

(43) Date de publication de la demande:
**26.07.1995  Bulletin 1995/30**

(73) Titulaire: **A R O**
**72500 Château du Loir (FR)**

(72) Inventeurs:
• **Boyer, Jean-Noel**
**F-37390 Mettray (FR)**
• **Pellegrini, Henri**
**F-72500 Chateau du Loir (FR)**

(74) Mandataire: **Picard, Jean-Claude Georges et al**
**Cabinet Plasseraud**
**84, rue d'Amsterdam**
**75440 Paris Cedex 09 (FR)**

(56) Documents cités:
**EP-A- 0 330 862         FR-A- 2 668 728**

## Description

Une pince ou machine à souder par résistance est essentiellement composée d'une structure mécanique sur laquelle sont montés un actionneur manuel ou à vérin pneumatique permettant d'exercer un effort suffisant pour serrer deux tôles entre des électrodes de soudage, un transformateur permettant de faire passer à travers les électrodes et les pièces à souder un courant électrique suffisant pour provoquer une fusion localisée du métal, ainsi qu'un appareil fournissant une mesure représentative de l'intensité du courant de soudage, et un circuit de réglage dudit courant de soudage.

Une telle machine est déjà décrite dans le document FR-A-2 668 728.

Le transformateur peut être incorporé à la pince ou séparé pour alléger l'outil. Dans ce dernier cas il sera relié à la pince par un câble de forte section.

Afin de permettre le passage du courant pendant un temps déterminé, un interrupteur est monté en série sur l'alimentation primaire du transformateur. Cet interrupteur pourra être mécanique (contacteur) ou statique (thyristors ou triacs). Dans le cas de contacteur à thyristors, on aura la possibilité de faire varier la puissance de soudage en retardant plus ou moins l'allumage des thyristors. On aura dans ce cas un variateur à thyristors.

Trois paramètres prépondérants régissent le procédé de la soudure par résistance :

- l'intensité du courant électrique traversant les pièces à assembler,
- l'effort de serrage des pièces,
- le temps de passage du courant.

Ces trois paramètres sont reliés par la relation fournissant l'énergie W consommée :

$$W = R\, I^2\, t$$

dans laquelle R représente la résistance au passage du courant, I l'intensité de ce courant et t la durée de son passage. Cette résistance R est essentiellement constituée par la résistance inter-tôles qui dépend directement de l'effort de serrage.

L'effort F est obtenu en réglant la pression dans le vérin pneumatique ou en comprimant plus ou moins un ressort. Pour un même réglage de l'actionneur d'effort, l'effort aux électrodes sera dépendant de la longueur des bras dans le cas de pinces dites articulées.

Le courant I est obtenu en réglant l'angle de conduction des thyristors dans le cas du variateur à thyristors. Il est dépendant de l'impédance de la pince, c'est-à-dire de la résistance des différents conducteurs et de la réactance des circuits fermés constitués par le secondaire de la pince.

Le temps t est contrôlé par la commande électronique qui commande l'ensemble de l'installation.

On conviendra que pour effectuer un point de soudure de qualité il n'existe pas seulement un triplet de paramètres (effort-intensité-temps) valable mais un "nuage" de combinaisons différentes entre ces trois paramètres, concourant toutes à la même qualité du point de soudure défini par le diamètre du noyau fondu.

Le domaine de soudabilité défini par les valeurs limites des paramètres effort et intensité du courant est variable en fonction de l'épaisseur des tôles à assembler et de la nature des tôles. Ce paramètre d'épaisseur n'est pas pris en compte dans le document FR-A-2 668 728.

Actuellement, les commandes de soudage permettent d'ajuster les paramètres effort (ou pression), intensité (ou temps d'allumage des thyristors) et temps. Les utilisateurs choisissent les bons paramètres en fonction de leur propre expérience ou en s'appuyant sur des tableaux ou abaques.

Cette façon de procéder présente plusieurs inconvénients:

- la relation entre la pression affichée et l'effort aux électrodes dépend de la configuration de la pince, comme indiqué plus haut,
- la relation entre le courant de soudage et l'angle de conduction des thyristors est complexe; elle suppose une mesure du courant réel pour ajuster l'angle adéquat ou d'avoir recours à des commandes de soudage sophistiquées permettant d'afficher directement le courant de soudage, qui est ensuite mesuré et régulé par la commande de soudage grâce à un capteur de mesure intégré dans la pince à souder,
- les abaques de paramètres de soudage donnent en général, pour une épaisseur et une qualité de tôles données, un seul triplet de paramètres (F, I et t) ; si pour une raison quelconque, l'effort ou l'intensité ne peuvent être atteints, le choix d'autres paramètres est laissé à l'appréciation de l'utilisateur, qui devra éventuellement effectuer des essais préalables.

Lorsque les pinces à souder sont utilisées sur des lignes de production, chaque outil est destiné à une application bien précise et dimensionné en conséquence. De plus, les paramètres de soudage étant choisis et vérifiés, ils ne vont plus varier tant que le programme de production reste inchangé.

Dans le cas de la réparation de carrosseries, de par la multitude de cas d'emploi, on aura recours à un outil moins adapté et plus universel. Cet outil doit être capable de réaliser tout assemblage de la structure de la voiture en ne réalisant que quelques points de soudure à la fois. Dans ce cas, on aura à changer de paramètres très souvent et la configuration de la pince elle-même évoluera de par les formes et longueurs des bras utilisés, ce qui rendra aléatoire une détermination précise de l'effort F de soudage. Il est alors difficile sinon impossible de s'appuyer sur des abaques standard, et de ce fait les paramètres affichés sont très approximatifs.

Le but de la présente invention est de remédier à ces inconvénients, et par suite d'établir une commande de soudage dont le principe est de prendre en compte les possibilités réelles de l'outil en matière d'effort et de courant et d'en déduire le troisième paramètre temps, toujours réglable dans une large gamme de valeurs, pour assurer une soudure de qualité optimale.

Le but est atteint grâce à un dispositif selon la revendication 1.

A cet effet, tout d'abord, un transformateur d'intensité installé sur le primaire du transformateur de soudage donne à un processeur une information de mesure du courant de soudage dès les premières périodes de 50 Hz de passage du courant.

D'autre part, un capteur d'effort intégré (mesure de la déformation de deux pièces métalliques) est installé à l'avant de la commande de soudage. Lorsque l'utilisateur change la configuration de l'outil (bras plus ou moins longs, pression différente, etc.) il ferme la pince sur le capteur d'effort. Une information engendrée par l'élément sensible mesurant la déformation du capteur est transmise au processeur.

Une troisième disposition de l'invention consiste à effectuer en laboratoire de nombreux essais permettant de tracer des faisceaux de courbes $I = f(t)$ et leur mise en mémoire dans l'appareil. Pour une même épaisseur de tôles, plusieurs courbes ont donc été mémorisées, correspondant à des efforts différents. Chaque courbe donne pour un effort donné une infinité de couples de valeur $(I, t)$ permettant d'obtenir une qualité de soudure optimale.

L'invention va maintenant être décrite plus en détail avec référence aux différentes figures.

Dans le dessin ci-annexé :

- la figure 1 représente les principaux organes d'une machine ou pince de soudage par résistance classique;
- la figure 2 montre schématiquement la formation d'un point de soudure entre deux tôles, grâce à une telle machine ;
- la figure 3 montre à titre purement indicatif l'évolution de la résistance R entre les tôles à assembler en fonction de l'effort F que les deux électrodes de la figure 2 exercent sur ces tôles ;
- la figure 4 montre la détermination du domaine de soudabilité sur un graphique $I = f(t, F)$ ;
- la figure 5 représente schématiquement une machine de soudage par résistance équipée conformément à l'invention;
- la figure 6 est un graphique illustrant le fonctionnement de cette machine ; et
- la figure 7 représente le schéma d'un des algorithmes utilisables.

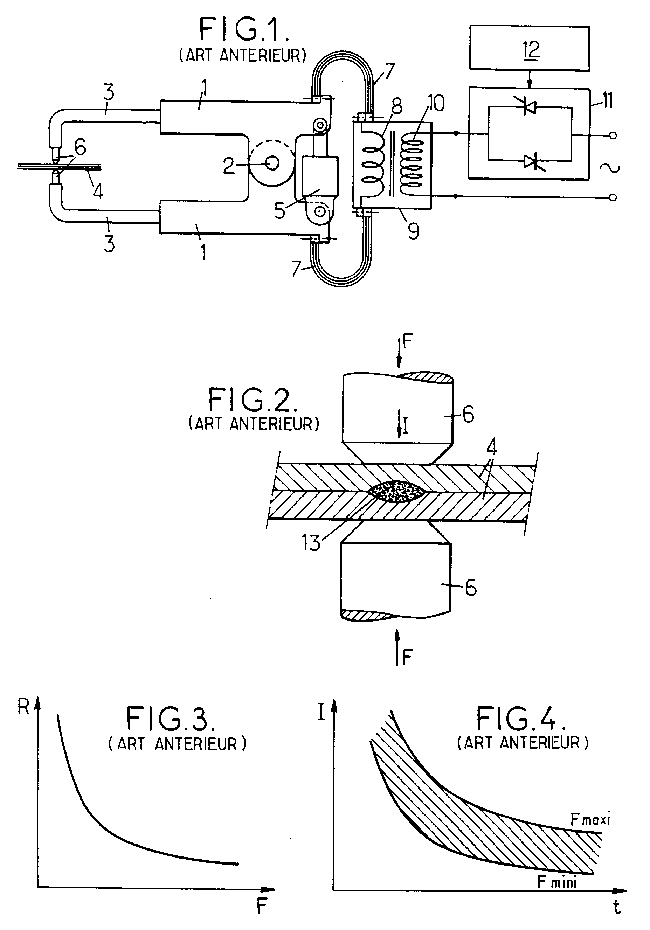

La machine représentée à la figure 1 comporte une pince de soudage à deux branches 1 articulées sur un axe 2 et portant à leurs extrémités des bras 3 et des électrodes de soudage 6. Les objets à souder, par exemple des tôles de carrosserie, sont référencés en 4. En 5 on a représenté un actionneur, par exemple à vérin pneumatique ou analogue, apte à solliciter les extrémités de soudage 6 l'une contre l'autre de sorte à ce qu'elles exercent sur les tôles 4 un effort de serrage déterminé F. Le courant de soudage, d'intensité I, est amené aux électrodes 6 par des câbles souples de grosse section 7 reliés au secondaire 8 d'un transformateur de soudage 9. Le primaire 10 de ce transformateur est alimenté par un circuit de réglage d'intensité 11, par exemple un variateur à thyristors, lui-même branché sur le secteur, l'angle d'ouverture des thyristors étant commandé par un circuit de réglage 12.

La figure 2 montre pour mémoire la formation d'un point de soudage 13 entre les deux tôles 4 enserrées entre les extrémités de soudage 6 des électrodes, parcourues par un courant électrique I et soumises à un effort de soudage F.

La figure 3 montre la variation de la résistance de contact R au niveau du point de soudage entre les tôles, en fonction de l'effort de soudage F. On voit que pour les faibles valeurs d'efforts la résistance R peut varier fortement en fonction de l'effort F.

La figure 4 montre le domaine de soudabilité entre deux courbes $I = f(t)$ avec l'effort F comme paramètre.

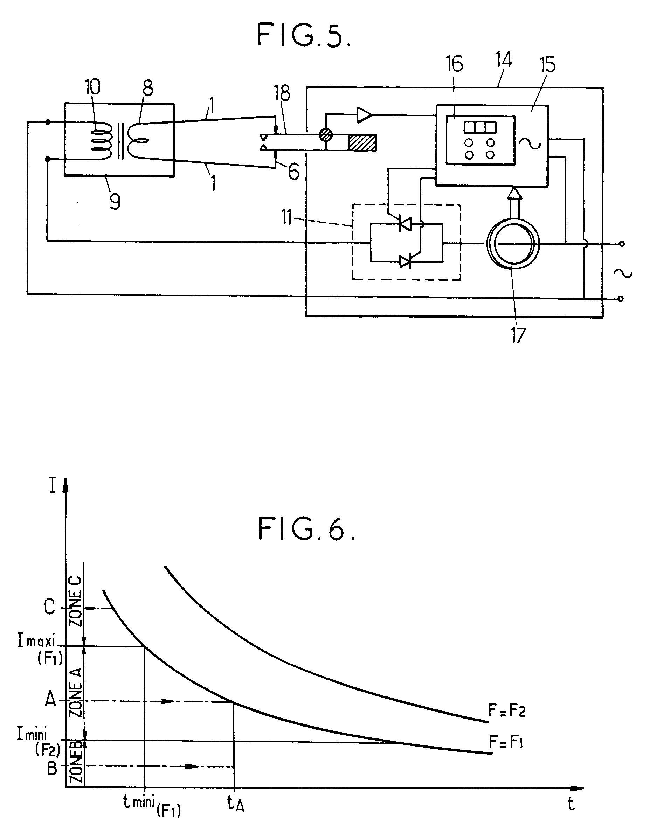

La figure 5 montre une machine de soudage du type de celle de la figure 1, équipée conformément à l'invention, et dans laquelle les organes principaux ont été repérés par les mêmes références que dans la figure 1. Dans ce schéma, le variateur à thyristors 11 est commandé par un circuit de réglage 14 dont il fait partie et qui comporte en outre un calculateur à microprocesseur 15 dans lequel sont mémorisées un ensemble de courbes de fonctionnement, comme indiqué plus haut. Un clavier à affichage 16 permet le dialogue entre l'opérateur et le calculateur. Ce calculateur reçoit par ailleurs d'un capteur de courant 17 des indications représentatives de la valeur du courant de soudage I. Le circuit de réglage 14 comporte enfin un capteur d'efforts 18 fournissant au processeur un signal représentatif de l'effort F.

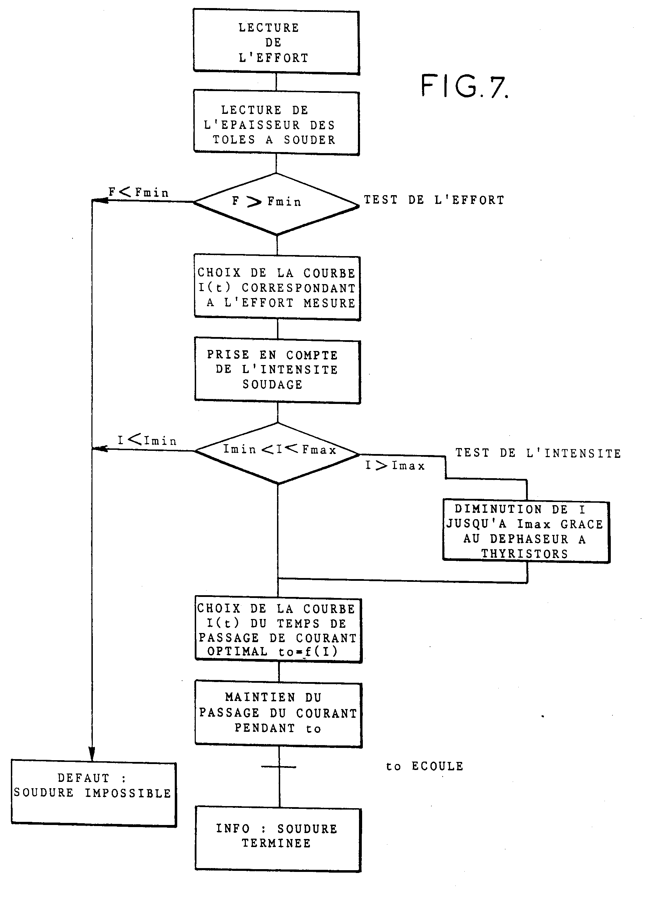

Ceci étant, la machine pourra fonctionner selon le principe défini par l'algorithme de régulation de la figure 7, qui s'explique de lui-même. On voit sur ce schéma que la courbe I(t) est choisie, parmi les courbes enregistrées dans le processeur, en fonction de l'effort F exercé sur les tôles, effort F mesuré directement, et également en fonction de l'épaisseur des tôles indiquée par l'utilisateur. On vérifie que cet effort est suffisant, et que l'intensité I du courant est bien comprise entre des valeurs minima et maxima prédéterminées. Sur la figure 6, $F = F_1$ et $F = F_2$ désignent deux des courbes I(t) mises en mémoire, avec F comme paramètre. Dans la zone A, le courant I est correct ($I_{min} < I < I_{max}$) ; le courant peut passer pendant le temps $t_A$. Le temps $t_o = f(I)$ de passage optimal du courant est choisi automatiquement dans cette plage. Dans la zone B, $I < I_{min}$, et le soudage est impossible quel que soit le temps pendant lequel on fait passer le courant, ce qui peut être indiqué par une alarme quelconque (voir aussi figure 7). Dans la zone C, $I > I_{max}$, et le microprocesseur commande une modification de l'angle d'allumage des thyristors du variateur pour obtenir $I \leq I_{max}$. En effet, un courant trop important pourrait provoquer des projections de matière incandescente, par suite d'un échauffement trop brutal, ce qui nuirait à la qualité de la soudure.

Il est à noter que la mesure de l'effort F n'est pas nécessaire à chaque point de soudure. Elle ne doit être faite que lorsque la configuration de la pince est modifiée.

La mesure d'intensité I est effectuée dès le début de l'exécution du point de soudure. Si pour n'importe quelle raison, aucun passage de courant n'est détecté, le processeur attend un temps donné puis déclare la soudure impossible, comme cela vient d'être indiqué.

**Revendications**

1. Dispositif de commande de soudage auto-adaptative pour pinces à souder par résistance, associé à une structure mécanique sur laquelle sont montés un actionneur manuel ou à vérin pneumatique permettant d'exercer un effort suffisant pour serrer deux tôles entre des électrodes de soudage, un transformateur permettant de faire passer à travers les électrodes et les pièces à souder un courant électrique suffisant pour provoquer une fusion localisée du métal, un appareil (17) fournissant une mesure représentative de l'intensité (I) du courant de soudage, et un circuit (14) de réglage dudit courant de soudage, caractérisé en ce qu'il comporte un capteur d'efforts (18) propre à fournir une mesure de l'effort (F) s'exerçant directement entre lesdites électrodes de soudage (6), et un microprocesseur dans lequel est mis en mémoire un réseau de courbes I(t) préétablies pour différentes valeurs de l'effort (F) et pour chaque valeur de l'épaisseur des deux dites tôles, ledit microprocesseur déterminant le choix de la courbe idéale dudit réseau en fonction dudit effort mesuré (F) pour l'épaisseur des deux tôles à souder, ainsi que la durée optimale ($t_o$) du soudage, après avoir vérifié que l'intensité (I) du courant de soudage est suffisante ($I \geq I_{min}$) et inférieure à une valeur maximale ($I_{max}$) prédéterminée.

2. Dispositif selon la revendication 1, caractérisé en ce que ledit capteur d'efforts (18) est intégré à ce dispositif.

**Claims**

1. Self-adaptive resistance welding gun control device, connected to a mechanical structure on which are fitted a manual or pneumatic actuator which allows sufficient force to be applied to lock two sheets between the welding electrodes, a transformer which allows sufficient electric current to pass through the electrodes and the pieces being welded to cause localized fusion of the metal, an apparatus (17) providing a representative measure of the intensity (I) of the welding current, and a control circuit (14) for the said welding current, characterised in that it comprises a force sensor (18) capable of providing a measure of the force (F) being exerted directly between the said welding electrodes (6), and a micro processor in which is stored a network of pre-established curves I(t) for different values of the force (F) and for each value of the thickness of the two said sheets, the said micro processor determining the choice of the ideal curve of the said network as a function of the said force measured (F) for the thickness of the two sheets to be welded as well as the optimum duration ($t^o$) of welding, after having checked that the intensity (I) of the welding current is sufficient ($I \geq I_{min}$) and lower than a predetermined maximum value ($I_{max}$).

2. Device according to claim 1 characterised in that the said force sensor (18) is integrated in this device.

**Patentansprüche**

1. Vorrichtung zur selbsteinstellenden Schweißsteuerung für Widerstandsschweißzangen, welche verbunden ist mit einem mechanischen Aufbau, an dem ein handbedienbares Betätigungselement oder ein pneumatisches Stellgerät angebracht ist, welches das Ausüben einer zum Einklemmen zweier Bleche zwischen Schweißelektroden hinreichenden Kraft erlaubt, einem Transformator, welcher es erlaubt, einen zum Bewirken eines lokalen Schmelzens des Metalls hinreichenden elektrischen Strom durch die Elektroden und die zu schweißenden Teile fließen zu lassen, einer Einrichtung (17), welche eine Messung liefert, die repräsentativ für die Schweißstromstärke (I) ist und einer Schaltung (14) zum Einstellen des Schweißstroms, dadurch gekennzeichnet, daß sie einen Kraftsensor (18), welcher zum Liefern einer Messung der Kraft (F) geeignet ist, die unmittelbar zwischen den Schweißelektroden (6) ausgeübt wird, und einen Mikroprozessor umfaßt, in welchem ein System von Verläufen I(t) gespeichert ist, welche zuvor für verschiedene Werte der Kraft (F) und für jeden Wert der Dicke der zwei Bleche festgelegt wurden, wobei der Mikroprozessor für die Dicke der zwei zu schweißenden Bleche die Wahl des idealen Verlaufs des Systems in Abhängigkeit von der gemessenen Kraft (F) sowie die optimale Schweißdauer ($t_0$) festlegt, nachdem er geprüft hat, daß die Schweißstromstärke (I) hinreichend ($I \geq I_{min}$) und kleiner als ein vorbestimmter Maximalwert ($I_{max}$) ist.

2. Vorrichtung nach Anspruch 1, dadurch gekennzeichnet, daß der Kraftsensor (18) in dieser Vorrichtung integriert ist.

EP 0 664 182 B1

# FIG.1.
(ART ANTERIEUR)

# FIG.2.
(ART ANTERIEUR)

# FIG.3.
(ART ANTERIEUR)

# FIG.4.
(ART ANTERIEUR)

5

# FIG.5.

# FIG.6.

EP 0 664 182 B1

## FIG.7.

```
        ┌─────────────┐
        │   LECTURE   │
        │     DE      │
        │  L'EFFORT   │
        └─────────────┘
               │
        ┌─────────────┐
        │  LECTURE DE │
        │ L'EPAISSEUR DES │
        │ TOLES A SOUDER  │
        └─────────────┘
               │
F<Fmin ◄──────◊  F > Fmin        TEST DE L'EFFORT
               │
        ┌─────────────┐
        │ CHOIX DE LA COURBE │
        │ I(t) CORRESPONDANT │
        │ A L'EFFORT MESURE  │
        └─────────────┘
               │
        ┌─────────────┐
        │ PRISE EN COMPTE │
        │ DE L'INTENSITE  │
        │    SOUDAGE      │
        └─────────────┘
               │
I<Imin ◄──────◊ Imin<I<Fmax      TEST DE L'INTENSITE
               │        I>Imax
               │        ┌─────────────┐
               │        │ DIMINUTION DE I │
               │        │ JUSQU'A Imax GRACE │
               │        │ AU DEPHASEUR A │
               │        │  THYRISTORS    │
               │        └─────────────┘
        ┌─────────────┐
        │ CHOIX DE LA COURBE │
        │ I(t) DU TEMPS DE   │
        │ PASSAGE DE COURANT │
        │ OPTIMAL to=f(I)    │
        └─────────────┘
               │
        ┌─────────────┐
        │  MAINTIEN DU │
        │ PASSAGE DU COURANT │
        │  PENDANT to  │
        └─────────────┘
               │              to ECOULE
┌─────────────┐
│  DEFAUT :   │
│ SOUDURE IMPOSSIBLE │
└─────────────┘
        ┌─────────────┐
        │ INFO : SOUDURE │
        │   TERMINEE    │
        └─────────────┘
```

7